# EUROPÄISCHE PATENTSCHRIFT

(11) **EP 2 608 223 B1**
(45) Veröffentlichungstag und Bekanntmachung des Hinweises auf die Patenterteilung: **23.04.2014**
(21) Anmeldenummer: 11306694.8
(22) Anmeldetag: 19.12.2011
(51) Int. Cl.: H01B 12/16, F25D 3/10

(54) **Verfahren zum Kühlen einer Anlage für supraleitfähige Kabel**
Method for cooling an assembly for superconductive cables
Procédé de refroidissement d'une installation pour câble supraconducteur

(43) Veröffentlichungstag der Anmeldung: 26.06.2013
(73) Patentinhaber: Nexans, 75008 Paris (FR)
(72) Erfinder: Schippl, Klaus, 30659 Hannover (DE); Stemmle, Mark, Dr., 30625 Hannover (DE); Schmidt, Frank, 30855 Langenhagen (DE)
(74) Vertreter: Döring, Roger

(56) Entgegenhaltungen:
- EP-A1- 2 328 156
- JP-A- 2010 146 867
- US-A- 3 882 687
- US-A1- 2007 028 636

## Beschreibung

Die Erfindung bezieht sich auf ein Verfahren zum Kühlen einer Anlage für supraleitfähige Kabel, welche zwei thermisch isolierte Endenabschlüsse und mindestens einen zwischen denselben angeordneten thermisch isolierten, rohrförmigen Kryostat aufweist, in dem mindestens ein supraleitfähiges Kabel angeordnet ist, mit welchem in einem Kühlmittelvorrat vorhandener, flüssiger Stickstoff mittels einer Pumpe durch einen ersten Endenabschluß und den Kryostat zu einem zweiten Endenabschluß gepumpt wird (EP 2 328 156 Al).

Supraleitfähige Kabel haben in heutiger Technik elektrische Leiter aus einem Verbundstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rare-earth-Barium-Kupfer-Oxid), insbesondere YBCO (Yttrium-Barium-Kuofer-Oxid), als Materialien der 2. Generation. Derartige supraleitfähige Leiter werden in bekannter Technik mit flüssigem Stickstoff gekühlt, der dafür eine Betriebstemperatur von üblicherweise weniger als 77 K hat.

Zum Kühlen des Stickstoffs auf die angegebene Temperatur werden bei bekannten Verfahren Kühlaggregate eingesetzt, an welche Pumpen angeschlossen sind, mittels derer der flüssige Stickstoff mit ausreichendem Druck in einen Endenabschluß und durch den Kryostat zum anderen, zweiten Endenabschluß gepumpt wird. Ein solches Verfahren ist beispielsweise in der eingangs erwähnten EP 2 328 156 A1 beschrieben. Der Stickstoff kann vom zweiten Endenabschluß zur erneuten Kühlung auf Betriebstemperatur durch ein geeignetes Rohr zum jeweiligen Kühlaggregat zurückgeführt werden. Der Aufwand ist insgesamt hoch und die bekannten Kühlaggregate weisen Verschleißteile auf, die gegebenenfalls ausgetauscht werden müssen. Ein solches Kühlaggregat muß daher ständig gewartet werden.

Der Erfindung liegt die Aufgabe zugrunde, das eingangs geschilderte Verfahren zu vereinfachen.

Diese Aufgabe wird gemäß der Erfindung dadurch gelöst,
- daß für den Kühlmittelvorrat mindestens ein vakuumisolierter Tank eingesetzt wird, in dem sich der auf Betriebstemperatur befindliche Stickstoff befindet und aus dem das Kühlmittel herausgepumpt wird, und
- daß zur Bereitstellung einer zum Betrieb der Anlage erforderlichen Menge an flüssigem Stickstoff der in dem Tank enthaltene Vorrat an flüssigem Stickstoff bei laufendem Betrieb ergänzt oder auf einen anderen, flüssigen Stickstoff enthaltenden Tank auf umgeschaltet wird.

Dieses Verfahren arbeitet nahezu wartungsfrei, da Verschleißteile zur Kühlung des Stickstoffs nicht vorhanden sind. Ein mit flüssigem Stickstoff gefüllter Tank wird dem Anlagenbetreiber vom Erzeuger des Stickstoffs gegen Entgeld zur Verfügung gestellt. Der Stickstoff kann in bevorzugter Ausführungsform in zeitlichen Abständen bei laufendem Betrieb nachgefüllt werden. Es ist aber auch möglich, einen zweiten Tank einzusetzen, auf den die Versorgung der Anlage ohne Unterbrechung des Betriebs gegebenenfalls umgeschaltet wird.

Der Stickstoff, der sich mit zunehmender Entfernung von der Einspeisestelle der Anlage nach und nach erwärmt, wird mit Vorteil in den Tank zurückgeführt, in welchem er verdampfen kann. Das beim Verdampfen erzeugte Kaltgas kann dann vorteilhaft zum zusätzlichen Kühlen der Anlagenkomponenten ausgenutzt werden, beispielsweise zum Kühlen der Endenabschlüsse.

Wenn beispielsweise bei Gleichstrombetrieb der Anlage zwei Kryostate zwischen den beiden Endenabschlüssen angeordnet werden, von denen jeder ein supraleitfähiges Kabel enthält, dann kann auch an den zweiten Endenabschluß ein Tank mit flüssigem Stickstoff angeschlossen werden.

Das Verfahren nach der Erfindung wird anhand der Zeichnungen in Ausführungsbeispielen erläutert.

Es zeigen:
Fig. 1 in schematischer Darstellung eine Anlage mit mindestens einem supraleitfähigen Kabel.
Fig. 2 einen Schnitt durch Fig. 1 längs der Linie II - II in vergrößerter Darstellung.
Fig. 3 eine gegenüber Fig. 1 ergänzte Ausführungsform der Anlage.

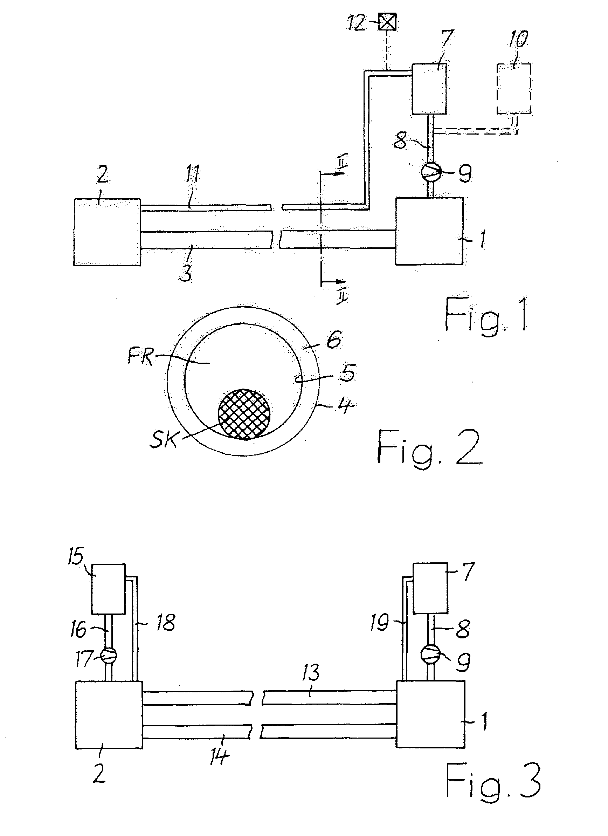

In Fig. 1 sind ein erster Endenabschluß 1 und ein zweiter Endenabschluß 2 schematisch angedeutet, zwischen denen ein Kryostat 3 angeordnet ist. Endenabschlüsse 1 und 2 sowie Kryostat 3 sind an sich bekannt. Auf ihren genaueren Aufbau wird daher hier nicht eingegangen.

Ein Endenabschluß 1 bzw. 2 besteht grundsätzlich aus einem vakuumisolierten Gehäuse, in dem alle elektrischen Bauteile zum Anschließen mindestens eines elektrischen supraleitfähigen Kabels enthalten sind und das eine Durchführung zum Anschluß weiterführender, bei Normaltemperatur zu betreibender elektrischer Kabel aufweist. Ein Kryostat 3 besteht grundsätzlich aus mindestens einem metallischen Rohr, das thermisch isoliert ist. Ein solcher Kryostat 3 kann entsprechend Fig. 2 auch zwei mit Abstand konzentrisch zueinander angeordnete metallische Rohre 4 und 5 aufweisen, zwischen denen eine Vakuumisolierung 6 angebracht ist.

In dem Kryostat 3 ist mindestens ein elektrisches supraleitfähiges Kabel SK angeordnet, dessen Aufbau ebenfalls grundsätzlich bekannt ist. Es wird daher hier nicht auf denselben eingegangen. Der Kryostat 3 umschließt außerdem einen Freiraum FR, durch welchen beim Betrieb der Anlage flüssiger Stickstoff als Kühlmittel für das supraleitfähige Kabel SK geleitet wird.

Zur Anlage gehört auch ein vakuumisolierter Tank 7, der flüssigen Stickstoff enthält. Der Tank 7 ist über eine thermisch isolierte Rohrleitung 8, in welcher eine Pumpe 9 angeschlossen ist, mit dem ersten Endenabschluß 1 verbunden. Ein gegebenenfalls vorhandener zweiter Tank 10 ist gestrichelt eingezeichnet. Er kann dann mit dem ersten Endenabschluß 1 verbunden werden, wenn in dem ersten Tank 7 nicht mehr genügend flüssiger Stickstoff enthalten ist. Der Tank 7 - gegebenenfalls auch der Tank 10 - ist über eine thermisch isolierte Rohrleitung 11 mit dem zweiten Endenabschluß 2 verbunden. Zur Aufrechterhaltung eines vorgebbaren Druckniveaus in der Anlage kann vor dem Einlauf in den Tank 7 (oder 10) ein Druckregelventil 12 in die Rohrleitung 11 eingebaut werden.

Das Verfahren nach der Erfindung wird beispielsweise wie folgt durchgeführt:
Nach Durchschaltung aller elektrischen Übertragungswege wird - vor tatsächlichem Einschalten der elektrischen Spannung - mittels der Pumpe 9 flüssiger Stickstoff in den ersten Endenabschluß 1 geleitet und mit ausreichendem Druck durch den Endenabschluß 1 und den Kryostat 3 zum zweiten Endenabschluß 2 gepumpt.
Sobald das supraleitfähige Kabel SK ausreichend abgekühlt ist, kann dasselbe an eine elektrische Spannungsquelle angeschlossen werden. Die Kühlung des Kabels SK wird durch ständige Zufuhr von flüssigem Stickstoff aus dem Tank 7 aufrechterhalten.
Der Vorrat an flüssigem Stickstoff wird mit Vorteil im Tank 7 bei laufendem Betrieb dauernd ergänzt, um ein für einen sicheren Betrieb der Anlage ausreichendes Niveau aufrechtzuerhalten.

Gegebenenfalls kann zur Versorgung mit flüssigem Stickstoff auch auf den Tank 10 umgeschaltet werden. Der Tank 7 kann dann wieder aufgefüllt werden. In diesem Sinne kann für eine stets ausreichende Versorgung der Anlage mit flüssigem Stickstoff zwischen den Tanks 7 und 10 hin- und hergeschaltet werden.

In einer bevorzugten Ausführungsform des Verfahrens wird der am Ende der Übertragungsstrecke beim Erreichen des zweiten Endenabschlusses 2 erwärmte Stickstoff über die Rohrleitung 11 in den Tank 7 zurückgeführt. Der Stickstoff kann dann im Tank 2 verdampfen. Das beim Verdampfen erzeugte Kaltgas kann vorteilhaft
zum zusätzlichen Kühlen der Anlagenkomponenten ausgenutzt werden, beispielsweise zum Kühlen der Endenabschlüsse. Die nahezu auf Umgebungstemperatur aufgewärmte gasförmige Phase des Stickstoffs kann an die Umgebung abgeführt werden.

Das Verfahren nach der Erfindung kann auch dann mit Vorteil verwendet werden, wenn bei einer Gleichstromübertragung gemäß Fig. 3 zwei Kryostate 13 und 14 zwischen den beiden Endenabschlüssen 1 und 2 verlegt sind, von denen jeder zur getrennten Führung der beiden Polaritäten ein supraleitfähiges Kabel enthält. Bei einer solchen Anlage kann im Bereich des zweiten Endenabschlusses ein weiterer vakuumisolierter Tank 15 angeordnet werden, der flüssigen Stickstoff enthält. Der Stickstoff wird dem zweiten Endenabschluß 2 gegebenenfalls über eine thermisch isolierte Rohrleitung 16 zugeführt, in welcher eine Pumpe 17 angeschlossen ist.

Das Verfahren zur Kühlung dieser Anlage wird beispielsweise mit Vorteil so durchgeführt, daß flüssiger Stickstoff dem ersten Endenabschluß 1 zugeführt und durch den Kryostat 13 zum zweiten Endenabschluß 2 gepumpt wird. Dort kann der erwärmte Stickstoff über eine thermisch isolierte Rohrleitung 18 in den Tank 15 geführt werden, mit dem weiter oben geschilderten zusätzlichen Kühleffekt des Kaltgases.

Gleichzeitig wird aus dem Tank 15 flüssiger Stickstoff dem zweiten Endenabschluß 2 zugeführt und durch den Kryostat 14 zum ersten Endenabschluß 1 gepumpt. Der erwärmte Stickstoff kann von dort aus über eine thermisch isolierte Rohrleitung 19 in den Tank 7 geführt werden.

Zur Aufrechterhaltung eines bestimmten, vorgegebenen Druckniveaus in der Anlage kann auch bei dieser Ausführungsform mit zwei Tanks 7 und 15 ein Druckregelventil vor dem jeweiligen Tankeinlauf in die rückführende Rohrleitung eingebaut werden.

## Patentansprüche

1. Verfahren zum Kühlen einer Anlage für supraleitfähige Kabel, welche zwei thermisch isolierte Endenabschlüsse und mindestens einen zwischen denselben angeordneten thermisch isolierten, rohrförmigen Kryostat aufweist, in dem mindestens ein supraleitfähiges Kabel angeordnet ist, mit welchem in einem Kühlmittelvorrat vorhandener, flüssiger Stickstoff mittels einer Pumpe durch einen ersten Endenabschluß und den Kryostat zu einem zweiten Endenabschluß gepumpt wird, **dadurch gekennzeichnet,**
- **daß** für den Kühlmittelvorrat mindestens ein vakuumisolierter Tank (7) eingesetzt wird, in dem sich der auf Betriebstemperatur befindliche Stickstoff befindet und aus dem der Stickstoff herausgepumpt wird, und
- **daß** zur Bereitstellung einer zum Betrieb der Anlage erforderlichen Menge an flüssigem Stickstoff der in dem Tank (7) enthaltene Vorrat an flüssigem Stickstoff bei laufendem Betrieb ergänzt oder auf einen anderen, flüssigen Stickstoff enthaltenden Tank (10) umgeschaltet wird.

2. Verfahren nach Anspruch 1, **dadurch gekennzeichnet,**
- **daß** der Stickstoff vom zweiten Endenabschluß (2) aus über eine thermisch isolierte Rohrleitung (11) in den Tank (7) zurückgeführt wird und
- **daß** das dadurch durch Verdampfen erzeugte Kaltgas zum zusätzlichen Kühlen der Anlage verwendet wird.

3. Verfahren nach Anspruch 2, **dadurch gekennzeichnet, daß** in die Rohrleitung (11) ein Druckregelventil (12) eingebaut wird.

4. Verfahren nach Anspruch 1, **dadurch gekennzeichnet,**
- **daß** zwischen den beiden Endenabschlüssen (1,2) zwei Kryostate (13,14) angeordnet werden, von denen jeder mindestens ein supraleitfähiges Kabel enthält,
- **daß** bei jedem der beiden Endenabschlüsse (1,2) ein jeweils mit demselben verbundener, vakuumisolierter Tank (7,15) angeordnet wird und
- **daß** der flüssige Stickstoff von dem einen Tank (7) aus durch einen der Kryostate (13) und von dem anderen Tank (15) aus durch den anderen Kryostat (14) gepumpt wird.

## Claims

1. Method for cooling a system for superconductive cables, which comprises two thermally insulated terminals (1,2) and at least one thermally insulated, tubular cryostat (3) arranged between the terminals, in which at least one superconductive cable is arranged, by which liquid nitrogen which is available in a cooling medium supply is pumped by means of a pump through a first terminal (1) and the cryostat (3) to a second therminal (2), **characterized in**
- **that** at least one vacuum insulated tank (7) is provided for the cooling medium, which contains the nitrogen having its operating temperature and from which the nitrogen is pumped out, and
- **that** for the supplement of a needed volume of liquid nitrogen the volume contained in the tank is completed during continuous operation or the supply is switched over to another tank containing liquid nitrogen.

2. Method according to claim 1, **characterized in**
- **that** the nitrogen is returned from the second terminal (2) through a thermally insulated tube (11) into the tank (7) and
- **that** the cold gas produced therefrom by evaporation is used for additional cooling of the system.

3. Method according to claim 2, **characterized in that** a pressure regulating valve (12) is mounted in the tube (11).

4. Method according to claim 1, **characterized in**
- **that** two cryostats (13,14) are positioned between the two terminals (1,2) each of which contains at least one superconductive cable,
- **that** at each of the two terminals (1,2) a vacuum insulated tank (7,15) is positioned with connection to the same and
- **that** the liquid nitrogen is pumped from the one tank (7) through one of the cryostats (13) and from the other tank (15) through the other cryostat (14).

## Revendications

1. Procédé de refroidissement d'une installation de câbles supraconducteurs qui présente deux fermetures d'extrémité isolées thermiquement et au moins un cryostat de forme tubulaire, isolé thermiquement et disposé entre ces fermetures, dans lequel au moins un câble supraconducteur est disposé dans lequel de l'azote liquéfié présent dans une réserve d'agent de refroidissement est pompé au moyen d'une pompe à travers une première fermeture d'extrémité et le cryostat pour être envoyé vers la deuxième fermeture d'extrémité, **caractérisé en ce**
- **que** au moins une cuve (7) isolée sous vide dans laquelle de l'azote à température de fonctionnement est placé et hors de laquelle l'azote est pompé est utilisée comme réserve d'agent de refroidissement et
- **que** en ce que pour préparer la quantité d'azote liquéfié nécessaire pour la conduite de l'installation, la réserve d'azote liquéfié présente dans la cuve (7) est complétée en permanence ou une commutation sur une autre cuve (10) contenant de l'azote liquéfié est réalisée.

2. Procédé selon la revendication 1, **caractérisé en ce**
- **que** l'azote est renvoyé dans la cuve (7) depuis la deuxième fermeture d'extrémité (2) par l'intermédiaire d'un conduit tubulaire (11) thermiquement isolé et
- **que** en ce que le gaz froid ainsi formé par vaporisation est utilisé pour contribuer à refroidir l'installation.

3. Procédé selon la revendication 2, **caractérisé en ce qu'**une soupape (12) de régulation de pression est incorporée dans le conduit tubulaire (11).

4. Procédé selon la revendication 1, **caractérisé en ce**
- **que** deux cryostats (13, 14) qui contiennent chacun au moins un câble supraconducteur sont disposés entre les deux fermetures d'extrémité (1, 2),
- **qu'**une cuve (7, 15) isolée sous vide est disposée au niveau de chacune des deux fermetures d'extrémité (1, 2) et
- **que** y est raccordée et en ce que l'azote liquéfié est pompé depuis une cuve (7) par l'intermédiaire d'un des cryostats (13) et depuis l'autre cuve (15) par l'intermédiaire de l'autre cryostat (14).
